# EUROPEAN PATENT APPLICATION

(11) **EP 1 020 824 A2**
(43) Date of publication of application: **19.07.2000**
(21) Application number: 99124674.5
(22) Date of filing: 10.12.1999
(51) Int. Cl.: G07F 19/00, G06F 17/60

(54) **Technique for conducting secure transactions over a network**

(30) Priority: 11.12.1998 US 208998
(71) Applicant: CheckFree Corporation, Norcross, Georgia 30092 (US)
(72) Inventor: Ganesan, Ravi, Norcross, GA 30092 (US); Ganesan, Karuna, Norcross, GA 30092 (US); Kight, Peter, Alpharetta, GA 30022 (US)
(74) Representative: Schurack, Eduard F.

(57) **Abstract**

A method for conducting cashless transactions, includes receiving, at a first network device associated with a seller, information identifying a product intended to be purchased at a purchase price by a purchaser. The purchase price is to be paid through a transfer to the seller of funds deposited in or credited to an account of the purchaser. The identity of the account having the funds is and remains unknown to the seller. The authorization of the purchaser to pay the purchase price for the identified product through the transfer to the seller of the funds in the account is transmitted to a second network device associated with the financial institute at which the account is maintained. A determination is made as to whether or not the funds are sufficient with respect to the purchase price. If so, the authorization of the financial institute for the seller to proceed with delivery of the identified product is transmitted from the second network device to the first network device.

## Description

### Technical Field

The present invention relates generally to electronic commerce and more particularly to a technique for conducting secure transactions over a network such as the Internet.

### Background Art

Over the past several years an international network of networks known as the Internet has become increasingly popular. The Internet allows millions of users throughout the world to communicate with each other. To provide users with easier access to information available on Internet, a World Wide Web has been established. The World Wide Web allows information to be organized, searched and presented on the Internet using hypertext. Thus, using the World Wide Web a user can submit a query for information and be linked electronically to information of interest which has been stored at web locations on the Internet. Because of the use of hypertext, the information which can be queried and retrieved via the Internet includes not only textual information but also information in graphic, audio and video form. Web search engines and browsers have been developed to make searching and retrieval of information of interest on the Web relatively easy for virtually anyone having access to a personal computer or other device interconnected to the Internet.

Recently, merchants have began to exploit the Internet's capabilities in their marketing of goods and services, i.e. products. Numerous merchants have now established virtual storefronts using a hypertext document, commonly referred to as a Web "homepage", which users can access over the Internet. The merchant's "homepage" will typically provide information regarding products, and will often provide the prospective customer with the option to purchase a desired product by making the necessary selections and providing the necessary information to the merchant via the Internet. Hence, the Web offers a new and exciting channel for marketing goods and services over the Internet, providing merchants with direct access to millions of potential buyers throughout the world in a manner which has never before been possible.

In order to ensure payment for products and services ordered over the Internet, merchants have typically offered the purchaser the ability to pay using credit or debit cards. Such cards are now widely used throughout the world to make purchases without cash. Credit cards basically extend a payment credit to the credit card holder. Debit cards, on the other hand, basically provide a means for debiting the cardholder's deposit account funds held by an issuing financial institute. However, because the Internet is an open communication network with virtually no built-in security, many cardholders are reluctant to transmit their credit and debit card numbers over the Internet to the merchant's Web site.

Various techniques have been proposed for overcoming the reluctance on the part of potential purchasers to transmit their card numbers over the Internet. Many of the proposed techniques rely on cryptography. Using these techniques, credit and debit card account numbers are encrypted prior to transmission over the Internet to the merchant and decrypted prior to storage at the merchant's Web site. These techniques may well alleviate concerns regarding the vulnerability of sensitive account information during transmission over the Internet. However, there remains a concern that, because the decrypted credit or debit card account numbers are stored on merchant computers, e.g. Web servers, connected to the Internet, this information will continue to be susceptible to attack by hackers and others who may attempt to gain unauthorized access to the information from virtually anywhere in the world. Although firewalls and other security measures can be taken to protect the stored information from unauthorized intruders, many merchants have neither the resources nor the expertise to implement such measures. Hence, encrypted transmission alone does not eliminate the security concern of many cardholders.

Others have proposed establishing what might be termed "virtual cash" which can be transferred from a purchaser's computer to a merchant's computer to pay for a product ordered via the Internet. The merchant can then go to the "virtual cash" sponsor and exchange the "virtual cash" for actual cash. However, these techniques require the establishment of a new electronic monetary system and are reliant upon the financial worthiness of the "virtual cash" sponsor.

Still other proposed techniques utilize a type of "virtual cash", which is associated with a purchaser's deposit account at a financial institute. Using such a system the purchaser transfers the "virtual cash" along with its deposit account number to the merchant as payment for the purchased products. The merchant then transfers the "virtual cash" to the financial institute, at which the purchaser maintains the deposit account. The financial institute then debits the purchaser's deposit account by the amount represented by the "virtual cash" transferred to the merchant and pays the merchant using the funds withdrawn from the purchaser's deposit account. These latter techniques have many of the same problems associated with the use of credit and debit cards. That is, the deposit account number must be transmitted over the Internet and stored at the merchant's Web site, and accordingly may be susceptible to unauthorized access.

Potential purchasers' of products over the Internet have also raised concerns regarding the transfer of credit card, debit card and deposit account numbers, as well as the transfer of "virtual cash" payments to merchant Web sites which have little history or trade presence. In this regard, potential purchasers may have a valid concern that the Web merchant is nothing more than a front for fraudulently obtaining credit card account numbers, debit card account numbers, deposit account numbers and/or virtual cash from unsuspecting purchasers.

Techniques have additionally been proposed to provide a separate private network for transmission of sensitive account related information. These techniques do provide an extra measure of security but are disadvantageous in that an auxiliary communication network is required and the potential purchaser is forced to first divert his/her attention from the merchant's Web site and to then go back to the merchant's Web site to conclude the transaction.

Accordingly it would be desirable to be able to conduct cashless transactions without jeopardizing the security of credit card, debit card and deposit account numbers, and without having to establish a "virtual cash" system or separate communications network.

### Objectives of the Invention

Accordingly, it is an objective of the present invention to provide a technique for conducting cashless transactions, for example over the Internet.

It is another objective of the present invention to provide a technique for conducting cashless transactions which does not require disclosure of sensitive account related information.

It is still another objective of the present invention to provide a technique for conducting cashless transactions without the use of "virtual cash" or a separate private network to place an order.

Additional objects, advantages, novel features of the present invention will become apparent to those skilled in the art from this disclosure, including the following detailed description, as well as by practice of the invention. While the invention is described below with reference to preferred embodiment(s), it should be understood that the invention is not limited thereto. Those of ordinary skill in the art having access to the teachings herein will recognize additional implementations, modifications, and embodiments, as well as other fields of use, which are within the scope of the invention as disclosed and claimed herein and with respect to which the invention could be of significant utility.

### Summary Disclosure of the Invention

In accordance with the invention, a system is provided for conducting cashless transactions in which products, i.e. goods and/or services, purchased via a network interchange are paid for from funds deposited in a purchaser's deposit or credit, e.g. home equity loan, account. Using the system, the purchaser is not required to identify the account to the seller, e.g. is not required to disclose the account number. Although the seller is not privy to the identity of the account, the seller is provided with a high level of security that the purchase price will be paid. Hence, both the purchaser's account and the seller's compensation are secure. It will be understood that, although discussed in terms of purchase and sale transactions, the invention can be easily adapted to other types of transactions such as rentals, loans and bailments.

The system includes a communications network interconnecting a network device associated with a seller, e.g. a merchant, and a network device associated with a financial institute, e.g. a bank, credit union or other holder of purchaser funds in a deposit or credit account. The network could be of virtually any type, but is preferably a wide area public network such as the Internet. The seller network device could, for example, be a network server which is used to offer products to purchasers via a virtual storefront on the network. The financial institute network device may, for example, be a network server controlled by the financial institute itself or by a representative of the financial institute. If the financial institute network device is controlled by a representative, the representative could beneficially represent multiple financial institutes. The seller and financial institute network devices are preferably mainframe computers or high power mini computers, but could, under some circumstances, be work-stations or personal computers or other less powerful network devices.

In operation, the seller network device receives information identifying a product intended to be purchased at a purchase price by a purchaser. The seller network device also typically receives information identifying the intended purchaser. This latter information could, for example, include the purchaser's name and residential or business address. If the seller allows alternative methods of payment to its customers, the seller network device may also receive information indicative of the purchaser's intention to pay the purchase price through the transfer of deposit or credit account funds. All such information is typically transmitted to the seller network device via the network, by a network device associated with the purchaser. However, if desired, this information could alternatively be provided by the purchaser as direct input to the seller network device using a keyboard, mouse, voice digitizer or other user input device. The purchaser network device could be of any various types, but is most commonly a personal computer.

As discussed above, the payment of the purchase price will be made by a transfer to the seller of funds of the purchaser on deposit in a deposit account or credited to a credit account. To avoid jeopardizing the security of the deposit or credit account, which could occur if, for example, the identity of the account were transmitted over the network without being first encrypted, or were stored in an unencrypted form on the seller network device, or were simply disclosed to a seller intent on fraudulently withdrawing funds from the account, the identity of the account is not communicated to and remains unknown to the seller.

To facilitate payment, the financial institute network device receives, via the network either directly from the purchaser or through the seller, the authorization of the purchaser to pay the purchase price for the identified product through the transfer to the seller of funds in the deposit or credit amount. Preferably, the financial institute network device also determines if the deposited or credited funds are sufficient with respect to the purchase price. Generally this will require that the funds equal or exceed the purchase price; however, in certain implementations, the financial institute or its representative may provide some overdraft protection and hence deposited or credited funds equaling less than the purchase price could, in such implementations, be determined sufficient. If sufficient funds are available in the account, the financial institute network device transmits, via the network, an authorization for the seller to proceed with delivery of the identified product.

In a preferred implementation, the purchaser network device beneficially includes search engine and browser software which can be used to locate the seller's network address, and to access information stored at the address and download it to the purchaser network device. More particularly, the purchaser network device searches the network using the search engine to locate the network address of a seller having products of interest. The purchaser network device then uses Web browser to access the seller's "homepage" and other information available at the seller's network address. Responsive to commands entered at the purchaser network device, for example using a keyboard, mouse or other user input device, information relating to the purchase of products available from the seller is transmitted by the seller network device to the purchaser network device via the network. Such downloaded information will typically identify the products available for purchase, the purchase price associated with each of the respective products, and the available payment options. For example, the payment options may include the transfer to the seller of the deposited or credited funds, credit card payment and/or a debit card payment.

Using a user input device, the inputs can then be entered, at the purchaser network device to select a product from the available products for purchase. Inputs can also be entered to select payment of the purchase price through the transfer of the deposited or credited funds, from the available payment options. This information is transmitted by the purchaser network device to the financial institute network device. Typically, this information is also sent to the seller network device via the network. The information transmitted will also identify the purchaser and seller to the financial institute network device. If the purchaser has not been previously identified to the seller network device, the information transmitted to the seller network device will also include information identifying the purchaser. The transmitted information may also identify the financial institute to the seller.

The purchaser network device beneficially transmits this information to the seller and financial institute network devices automatically in response to the selecting payment by the transfer of deposited or credited funds. The transmission to the financial institute network device is preferably implemented using a hyperlink which automatically establishes a link from the purchaser network device to the financial institute network device upon selection of the applicable payment option.

With a network link established between the financial institute and purchaser network devices, the financial institute network device can transmit a request to the purchaser network device for authorization to transfer deposited or credited funds to the seller in payment of the purchase price of the identified products. Responsive to the request, the purchaser enters an authorization at the purchaser network device which is transmitted to the financial institute network device via the network. If desired, the seller network device may be required to transmit a notice of delivery of the product to the financial institute network device via the network, before any transfer of the deposited or credited funds to the seller occurs. In such a case, the financial institute network device transmits, via the network, a directive to transfer the funds from the deposit or credit account to the seller responsive to receipt of the notice of delivery. Typically, after the funds have been transferred, the financial institute network device will transmit to the purchaser network device, via the network, an account statement indicating the deposited or credited funds have been transferred from the account to the seller in payment of the purchase price of the identified products.

In accordance with other aspects of the invention, the system operates in real time. Each of the network devices is located at a separate network site or station and has a separate network address. The invention can be implemented using computer software instructions stored on a computer readable storage medium which, when read from the medium by a computer, causes the computer to perform one or more of the functions which have been described above. It will be recognized by those skilled in the art that the medium can be optical, electrical, electro-magnetic or of some other type, and may be in the form of a hard or floppy disk, semiconductor chip or some other form. The medium could, for example, be what is commonly referred to as random access memory (RAM), main memory or some other type of memory. It should also be understood that the network communication links between the seller network device and the financial institute and purchaser network devices can and will generally be relatively less secure than the link between the financial institute network device and the purchaser network device.

### Brief Description of Drawings

Figure 1 depicts exemplary networked the present invention.
Figure 2 depicts communication links which are established between various parties via the networks shown in Figure 1 in accordance with the present invention.
Figure 3 depicts exemplary product information downloaded from a seller to a purchaser in accordance with the present invention.
Figure 4 depicts exemplary ordering information downloaded from a seller to a purchaser in accordance with the present invention.
Figure 5 depicts exemplary log-on information required by a financial institute in order for a purchaser to authorization a transfer of funds from the purchaser's deposit account in accordance with the present invention.
Figure 6 depicts exemplary information downloaded from a financial institute to a purchaser to obtain the purchaser's authorization to transfer funds from the purchaser's deposit account in accordance with the present invention.
Figure 7 depicts an exemplary account statement downloaded from a financial institute to a purchaser after the transfer of funds from the purchaser's deposit account in accordance with the present invention.
Figure 8 is a flow chart of a process for conducting cashless transactions in accordance with the present invention.
Figure 9 depicts a computer suitable for use by the purchaser to access the Internet in accordance with the invention.
Figure 10 is an exemplary block diagram of components of the computer depicted in Figure 9.
Figure 11 depicts an Internet server suitable for use by a seller in accordance with the invention.
Figure 12 is an exemplary block diagram of components of the server depicted in Figure 11.
Figure 13 depicts an Internet server suitable for use by a financial institute or its representative in accordance with the invention.
Figure 14 is an exemplary block diagram of components of the server depicted in Figure 13.

### Best Mode for Carrying out the Invention

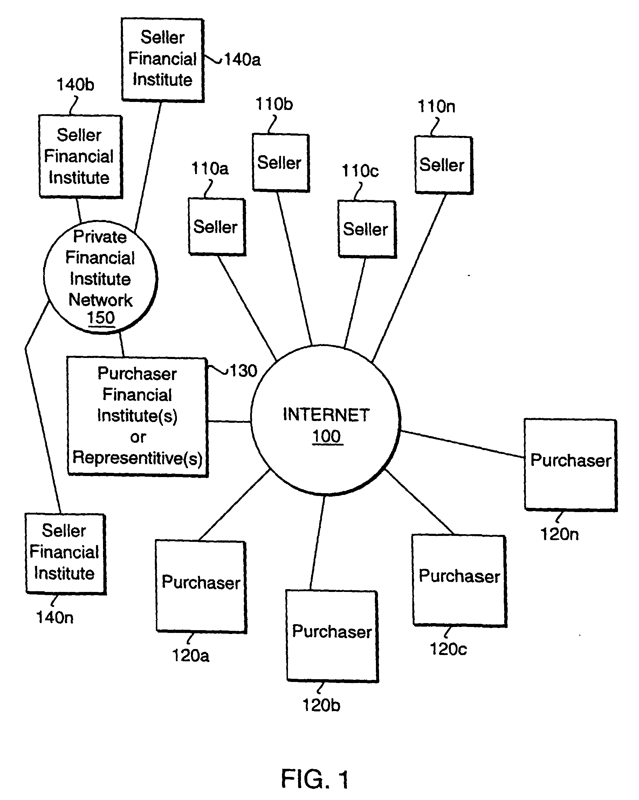

As shown in Figure 1, network 100 interconnects multiple sellers 110a-110n, multiple purchasers 120a-120n and a purchaser financial institute or representative of one or more purchaser financial institutes 130. The network 100 is shown to be the Internet, but could be virtually any type of network which is not considered particularly secured. Also shown is a network 150 interconnecting the purchaser financial institute/representative 130 and multiple seller financial institutes 140a-140n. The network 150 is shown to be a private financial institute network, such as the currently existing bank network over which it is quite common to electronically transfer funds between banks. Here again, the network 150 could be another type of network interconnecting the purchaser financial institute /representative 130 to financial institutes 140a-140n used by the sellers 110a-110n, so long as the network is considered relatively secured.

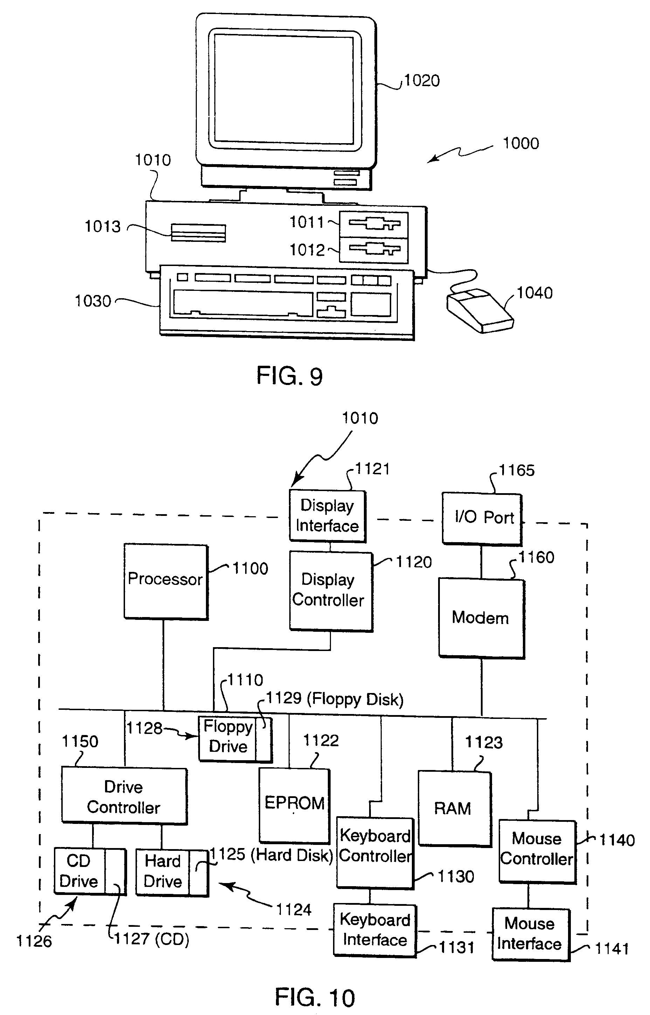

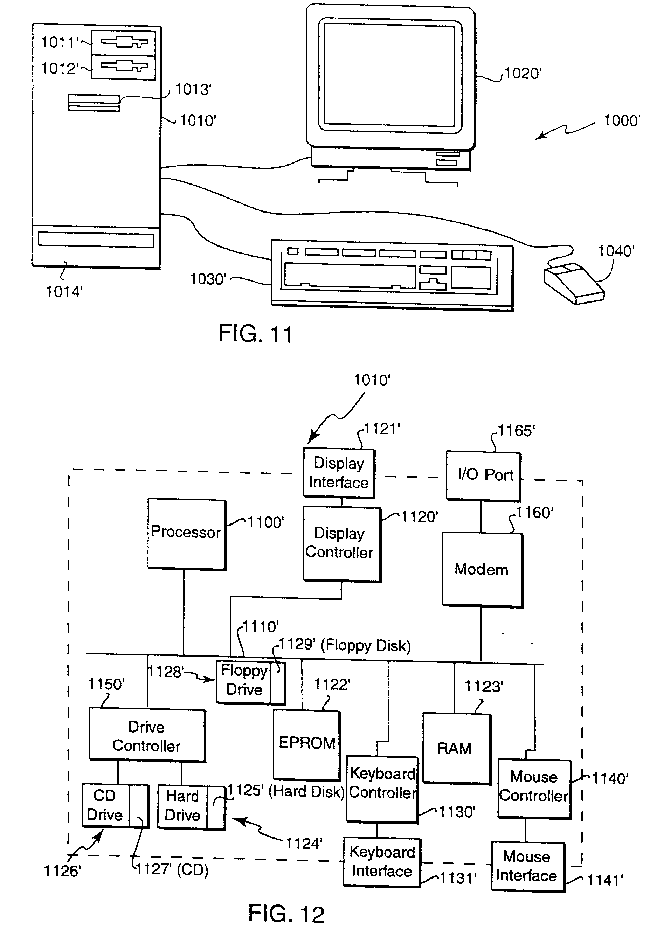

Each of the purchasers 120a-120n is preferably represented on the network 100 by a personal computer of the type depicted in Figures 9 and 10 which will be described further below. However it should be recognized that virtually any network device could be utilized so long as the device has sufficient processing and communication capabilities to function in the described manner. Each of the sellers 110a-110n and the purchaser financial institute/representative 130 is preferably represented on the Internet 100 by an Internet server of the applicable type shown in Figures 11-14 and as will be described further below. However, here again, any network compatible device which is capable of functioning in the described manner could be substituted for the servers shown in Figures 11-14 to represent any or all of the sellers 110a-110n and/or the purchaser financial institute/representative 130. It should be noted that all or some of the purchasers 120a-120n, sellers 110a-110n and purchaser financial institute/representative 130 could interconnect to the Internet 100 through an Internet service provider. As previously indicated, the purchaser financial institute/representative 130 could, if desired, represent multiple purchaser financial institutes. Furthermore, multiple financial institutes or representatives of financial institutes could be interconnected to the Internet with each functioning as will be described below with reference to the purchaser financial institute/representative 130.

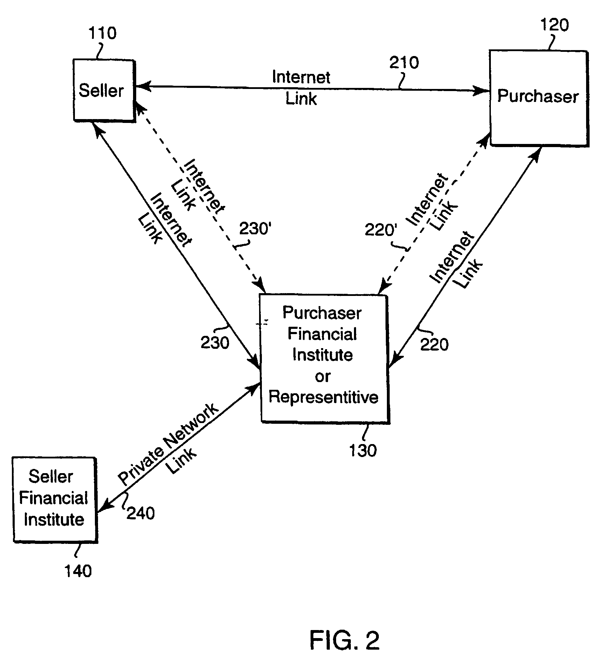

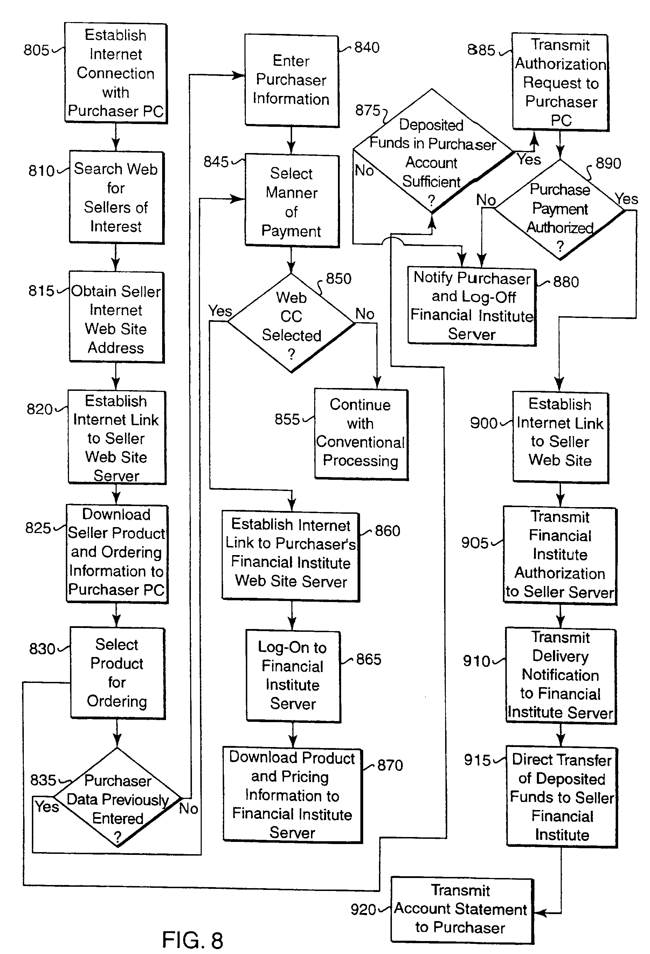

The interrelationship between one of the sellers 110,one of the purchasers 120,the purchaser financial institute/representative 130, and one of the seller financial institutes 140 will now be described. Referring first to Figures 2 and 8, a purchaser 120 establishes, in step 805, a connection to the Internet using the purchaser personal computer (PC) depicted in Figures 9 and 10. Using a search engine stored on the RAM of the purchaser PC, the purchaser 120, in step 810, searches the Web for sellers on the Web offering products of interests. In step 815, an Internet Web site address of the seller 110 is returned to the purchaser 120 via the Internet in response to the search query. In step 820, the purchaser 120 establishes an Internet link 210 with the seller 110 as shown in Figure 2.

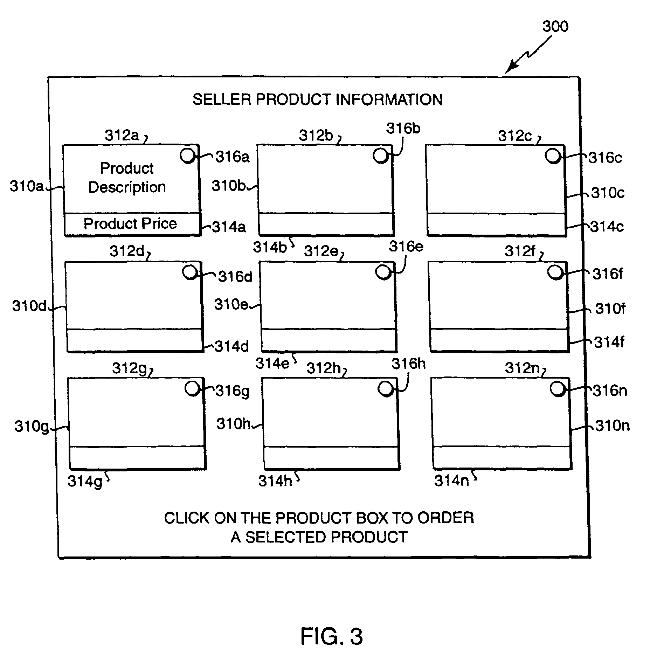

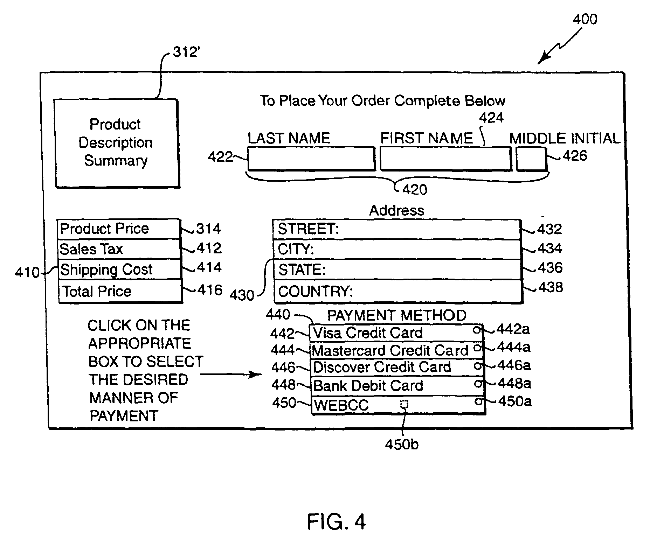

Referring now to Figures 2, 3 and 8, utilizing the Internet link 210 the seller 110, using the seller server depicted in figures 11 and 12, downloads product information to the purchaser 120, as indicated in step 825,which is displayed on the purchaser PC. As shown in Figure 3, the seller product information 300 includes multiple product offerings 310a-310n. For each product, a product description 312a-312n and a product price 314a-314n are provided. Associated with each product is an icon 316a-316n which can be clicked on to select a product which the purchaser 120 wishes to order. Accordingly, in step 830 of Figure 8, the purchaser selects a product for ordering by clicking on the appropriate icon 316a-316n. By clicking on a particular icon, other information downloaded with the product information, as shown in Figure 4, is presented to the purchaser 120 on the purchaser PC. Alternatively, by clicking on the icon, a message could be transmitted to the seller 110 indicating the selected product and, responsive to receipt of this transmission, the information shown in Figure 4 could be downloaded by the seller 110 via the Internet link 210 to the purchaser 120.

In any event, as is shown in Figure 4, the ordering information 400 includes a product description summary 312' which corresponds to the product description 312 of the selected product. Also provided is the product price 314 which is identical to the product price 314 shown in Figure 3 for the selected product. The pricing information 410 also includes the sales tax 412, shipping costs 414 and a summation of all costs as a total price 416.

In step 835 a determination is made as to whether or not purchaser specific data has been previously entered by the purchaser 120. The determination is made by the purchaser PC or by the seller server depending on whether the Figure 4 information is downloaded in step 825 or after a product has been selected in step 830. If purchaser specific data has not been previously entered, in step 840 the purchaser is required to enter name information 420 and address information 430. In the exemplary presentation shown in Figure 4, the purchaser 120 enters a last name 422, first name 424 and middle initial 426, along with a street address 432, city 434, state 436 and country 438. If this data has been previously entered by the purchaser, the name information 420 and address information 430 will automatically appear in the appropriate areas of Figure 4.

As shown in Figure 4 various payment options 440 are provided to the purchaser 120. The seller 110 is willing to accept payment by credit card including Visa 442, MasterCard 444 and Discover 446. The seller will also accept a bank debit card 448. Additionally provided is the option to pay using "WebCC" 450. To select the desired payment option, the purchaser 120 clicks on the appropriate one of icons 442a-450a.

In step 845 of Figure 8, the purchaser 120 clicks on the icon 450a to select "WebCC" as the desired manner of payment. In step 850, a determination is made by the purchaser PC as to whether or not "WebCC" is the selected manner of payment. If not, in step 855 the order can be conventionally processed.

If, in step 850 of Figure 8, it is determined that "WebCC" has been selected, in step 860 an Internet link 220 to the purchaser financial institute/representative 130 is established. The Internet link is established automatically by a hyperlink 450b shown in Figure 4, which is activated upon determining that "WebCC" is the selected manner of payment. It will be recognized that, if desired, this link could alternatively be established via the browser through the seller.

Once the link 220 has been established, a log-on request is transmitted by the purchaser financial institute/representative 130 to the purchaser 120. In step 865, purchaser 120 logs onto the network server representing the purchaser financial institute/ representative 130 by providing name information 420 and a password 510. The requested name information includes a last name 422, first name 424 and middle initial 426. The purchaser is required to enter this information to log-on to the financial institute/representative server. In the preferred implementation, communications over the Internet link 220 of Figure 2, which is established in step 860 of Figure 8, are encrypted prior to transmission and decrypted upon receipt. Accordingly Internet link 220 which interconnects the purchaser 120 with the purchaser financial institute/representative 130 is relatively secure as compared to the Internet link 210 which interconnects the purchaser 120 and the seller 110.

In step 870, with the log-on successfully completed, the product description summary 312' and pricing information 410 are downloaded to the financial institute/representative 130 over the Internet link 220. If desired, the name 420 and address 430 of the purchaser as indicated in Figure 4 may also be downloaded. It may be desirable, in certain implementations, to also download this information to the seller 110 via the Internet link 210, although this is not necessarily required. The product and pricing information downloaded to the purchaser financial institute/representative 130 may include, as part of the product description summary, some indicator which identifies the seller 110. Alternatively the hyperlink 450b could include information which identifies the seller. If so desired, the seller 110 could be separately identified in the information 400 represented in Figure 4.

In step 875, the financial institute/representative 130 makes a determination as to whether or not the funds deposited in the purchaser's account with the applicable purchaser financial institute are sufficient in view of the total purchase price 416. As noted above, credited funds from, for example, a home equity or other type loan could alternatively or conjunctively be associated with the account. This determination may be a simple determination that the deposited funds equal or exceed the total price 416. However, in certain implementations the financial institute may provide some overdraft protection, in which case the financial institute/representative 130 may be willing to approve the transaction even if the deposited funds will only partially cover the total purchase price 416.

In any event, if the deposited funds are determined to be insufficient, in step 880 the financial institute/representative 130 transmits a notification of insufficient funds via the Internet link 220 to the purchaser 120 and, unless the purchaser wishes to continue communications with the purchaser financial institute/representative 130 regarding other matters, the purchaser 120 logs-off the financial institute/representative server and may return to step 830 and proceed with the ordering of a different, perhaps less expensive, product.

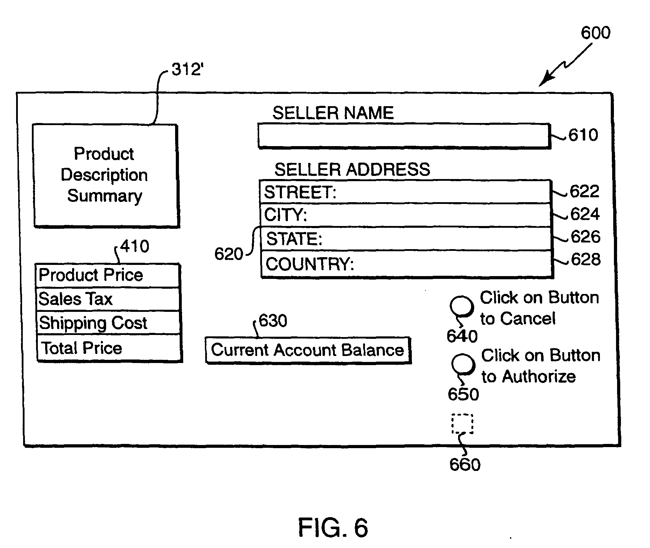

If the deposited funds are determined to be sufficient in step 875, in step 885 the financial institute/representative 130 transmits an authorization request 600 to the purchaser 120, via link 220. As shown in Figure 6, an exemplary authorization request 600 which can be presented to the purchaser 120 on the purchaser PC includes the product description summary 312' and the price information 410. The seller is also explicitly identified by name 610 and address 620, including the seller's street address 622, city 624, state 626 and country 628. A current deposit account balance 630 is also presented to the purchaser 120 along with an icon 640 for canceling the transaction and an icon 650 for authorizing the withdrawal and transfer of funds in the deposit account to pay the total price indicated for the described products. By clicking on icon 640 the purchaser 120 can indicate his/her decision not to authorize the transfer of deposit account funds in payment of the purchase price and thereby cancel the transaction. By clicking on icon 650 authorization to transfer deposit account funds in payment for the described product is indicated by the purchaser 130.

In step 890, the financial institute/representative 130 determines whether or not the transfer of the deposit account funds has been authorized by the purchaser. If not, a confirmatory notice is sent back to the purchaser 120 via the Internet link 220, The purchaser, unless he/she wishes to communicate with the financial institute/representative 130 regarding other matters, logs-off the financial institute/representative server and can continue by selecting another product for ordering in step 830. If the authorization to transfer deposit account funds is given in step 890, a hyperlink 660, as shown in Figure 6, establishes an Internet link 230, as shown in Figure 2, from the financial institute/representative 130 to the seller 110. As indicated in step 900.

In step 905, the financial institute/representative 130 transmits, via the Internet link 230, and authorization to proceed with the transaction to the seller 110. This authorization serves as a representation by the purchaser's financial institute to the seller that the total price will be paid to the seller 110. Because the purchaser's financial institute/representative 130 and seller 110 have previously established a relationship in connection with the offering of the "WebCC" payment option, required information, such as the identity of the seller's financial institute and the deposit account to which the purchaser's funds are to be transferred is already known to the purchaser's financial institute/representative 130. However, if desired, seller related information necessary for the electronic fund transfer could be otherwise provided by the seller to the purchaser financial institute/representative 130 so that the transfer of the purchaser's deposit account funds could be completed at the appropriate time. At this point, the seller will typically issue an order acceptance to the purchaser.

In step 910, the seller server transmits a delivery notice via the Internet link 230, or a subsequently established Internet link 230' between the seller 110 and purchaser's financial institutes/representative 130. This provides confirmation of delivery of the ordered product by the seller 110 to the purchaser 120. In the preferred implementation, after notification of delivery from the seller 110, in step 915 the financial institutes/representative server initiates a transfer of the funds from the deposit account of the purchaser 120 maintained with the purchaser's financial institute to the deposit account of the seller 110 maintained with the seller financial institute 140. This transfer is made by electronic fund transfer via the secure network link 240, as shown in Figure 2, over the private financial institute network 150 of Figure 1. Payment of course could be made based upon other than delivery. For example, payment could be required prior to delivery in which case step 910 could, if desired, be eliminated. Payment could also be made by check or draft rather than electronic fund transfer.

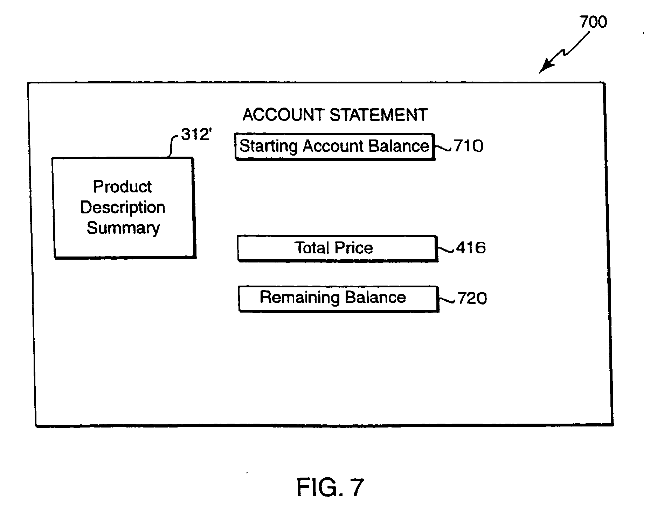

Thereafter an account statement 700, as shown in Figure 7, is provided in step 920 by the financial institute/representative 130 to the purchaser 120. This transmission, depending upon the implementation and circumstances, may be transmitted via Internet link 220 or a subsequently established relatively secure Internet link 220' between the purchaser's financial institute/representative 130 and purchaser 120.

Figures 9 and 10 depict an exemplary personal computer suitable for use by purchasers to access the Internet in the above-described embodiment of the invention. The computer is preferably a commercially available personal computer. The computer processor could, for example, be a Pentium™ processor. It will be recognized that the computer configuration is exemplary in that other components (not shown) could be added or substituted for those depicted and certain of the depicted components could be eliminated if desired.

The computer functions as described above with reference to Figures 1-8, in accordance with stored programming instructions which drive its operation. Preferably the computer stores its unique programing instructions on an EPROM, or hard disk. It will be recognized that only routine programming is required to implement the instructions required to drive the computer to operate in accordance with the invention, as described above. Further, since the computer components and configuration are conventional, routine operations performed by depicted components will generally not be described, such operations being well understood in the art.

Referring to Figure 9, the computer 1000 includes a main unit 1010 with slots 1011, 1012 and 1013, respectively provided for loading programming or data from a floppy disk and/or compact disk (CD) onto the computer 1000. The computer 1000 also includes a keyboard 1030 and mouse 1040 which serve as user input devices. A display monitor 1020 is also provided to visually communicate information to the user.

As depicted in Figure 10, the computer 1000 has a main processor 1100 which is interconnected via bus 1110 with various storage devices including EPROM 1122, RAM 1123, hard drive 1124, which has an associated hard disk 1125, CD drive 1126, which has an associated CD 1127, and floppy drive 1128, which has an associated floppy disk 1129. The memories, disks and CD all serve as storage media on which computer programming or data can be stored for access by the processor 1100. A drive controller 1150 controls the hard drive 1124, CD drive 1126 and floppy drive 1128. Also depicted in Figure 10 is a display controller 1120 interconnected to display interface 1121, a keyboard controller 1130 interconnected to keyboard interface 1131, a mouse controller 1140 interconnected to mouse interface 1141 and a modem 1160 interconnected to I/O port 1165, all of which are connected to the bus 1110. The modem 1160 and interconnected I/O port 1165 are used to transmit and receive signals via the Internet as described above. It will be understood that other components may be connected if desired to the bus 1110. By accessing the stored computer programming, the processor 1100 is driven to operate in accordance with the present invention.

The inter-operation of the various components of the computer depicted in Figures 9 and 10 in implementing the invention as described above will now be discussed. Transmitted signals corresponding to those issued from the seller and purchaser financial institute/representative servers are received via I/O port 1165 and modem 1160 and directed over the bus 1110 to processor 1100. The processor in accordance with programing instructions stored on EPROM 1122 processes the information to perform the functions required of the purchaser PC to accomplish cashless transactions in the above described manner. The programming instructions may be downloaded onto the RAM after activation of the computer 1000 and accessed by the processor 1100 directly from the RAM 1120 during system operation.

In particular, in accordance with its programmed instructions, the processor 1100 generates a signal which is transmitted via the modem 1160 and port 1165 to establish a link with the Internet 100 of Figure 1, as indicated by step 805 of Figure 8. As is discussed above, this link may be established through an Internet service provider.

Processor 1100 operates a Web search engine to locate sellers on the Internet 100 offering products of interest, as indicated in step 810 of Figure 8. An Internet Web site address of the seller 110 is returned via the port 1165 and modem 1160 to the processor 1100, as indicated in step 815. This information will typically be displayed by the display controller 1120 and interface 1121 on the monitor 1020 of Figure 9.

By operating a Web browser, the processor 1100 can establish an Internet link to the seller's "homepage" via modem 1160 and port 1165, as indicated in step 820. Once the link has been established to the seller's Internet server, product and ordering information can be received via the port 1165 and modem 1160 by the processor 1100. This information can be displayed on the monitor 1020 for perusal by the purchaser 120. The information may be presented as shown in Figure 3.

Using the mouse 1040, the purchaser 120 clicks on the appropriate icon 316 to select the product for ordering, as indicated in step 830. The processor 1100 then determines whether or not data identifying the purchaser has been previously entered as indicated in step 835. The processor 1100 directs the display controller 1120 to transmit signals via the display interface 1121 so that a screen, such as that shown in Figure 4, is displayed on the monitor 1020.

Depending upon the determination by the processor 1100 in step 835, either name information 420 and address information 430 previously stored in the RAM 1123 is automatically provided on the screen 400 shown in Figure 4, or, the purchaser 120, using the keyboard 1030, enters this information as indicated in step 840.

Using the mouse 1040 the purchaser selects the manner of payment by clicking on the icon 442 as indicated in step 845. The entered information is transmitted to the processor 1100 mouse controller 1140 and interface 1141. The processor 1100 then determines, as indicated in step 850, if the selected method of payment is "WebCC".

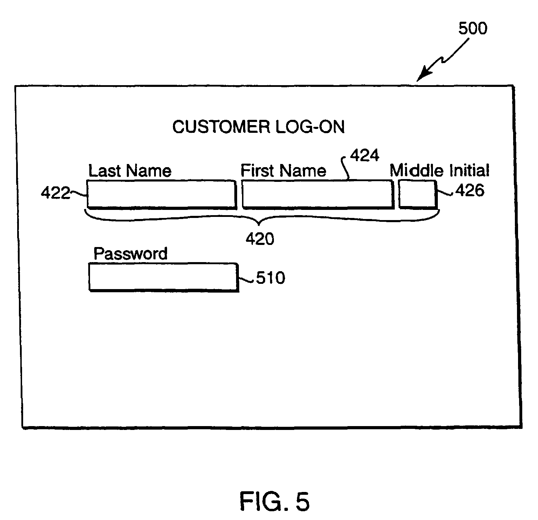

If so, a signal is generated by the processor 1100 implementing the hyperlink 450b to establish an Internet link 220 between the financial institute/representative server and the PC 1000, as indicated by step 860. The customer log-on request is received via the port 1165 and modem 1160. The processor 1100 directs the display controller 1120 to issue signals via the display interface 1121 to display a screen such as that shown in Figure 5 on the monitor 1020. The purchaser can now enter the necessary information using the keyboard 1030 to log on to the financial institute/representative server, as indicated in step 865. The information is received by the processor via the keyboard controller 1130 and interface 1131, responsive to which the processor 1100 generates signals which are transmitted via the modem 1160 and port 1165 to the purchaser financial institute/representative server over link 220.

After successful completion of the log-on procedure, the processor 1100 automatically generates signals transmitting the product and pricing information shown in Figure 4 via the modem 1160 and port 1165 to the purchaser financial institute/representative server, as indicated in step 870. Assuming that the deposit funds are sufficient, information is received via the port 1165 and modem 1160 by the processor 1100 requesting the purchaser's authorization to transfer deposited funds, as indicated in step 885. The processor 1100 directs the display controller 1120 to display this request on the monitor 1020, for example in the form shown in Figure 6. If the funds are insufficient notice, as indicated in step 880 is received.

Using the mouse 1040, the purchaser can now authorize the transfer or cancel the transaction. In either case, a signal is transmitted via the mouse interface 1141 and mouse controller 1140 to the processor 1100. Processor 1100 generates a signal reflecting the cancellation or authorization and directs the signal to be transmitted to the financial institute/representative server via the modem 1160 and port 1165. The processor 1100 next receives either a confirmatory notification that no authorization has been given, as indicated in step 880, or an account statement such as that shown in Figure 7, as indicated in step 920, if authorization has been given by the purchaser and the funds transferred. The notification or statement are received via the port 1165 and modem 1160 by the processor 1100. Responsive to the receipt of this information processor 1100 directs the display controller 1120 to control the display of the notification or statement on the monitor 1020 for presentation to the purchaser.

Figures 11 and 12 depict an exemplary network server suitable for use by sellers to access the Internet in the above-described embodiment of the invention. The server is preferably a commercially available high power, mini-computer or mainframe computer. The server processor could, for example, be an Alpha™ processor. Here again, it will be recognized that the server configuration is exemplary in that other components (not shown) could be added or substituted for those depicted and certain of the depicted components could be eliminated if desired.

The server functions as described above with reference to Figures 1-8, in accordance with stored programming instructions which drive its operation. As in the case of the purchaser computer, preferably the server stores its unique programming instructions on an EPROM or hard disk. It will be recognized that only routine programming is required to implement the instructions required to drive the server to operate in accordance with the invention, as described above. Further, since the server components and configuration are conventional, routine operations performed by depicted components will generally not be described, such operations being well understood in the art.

Referring to Figure 11, the server 1000' includes a main unit 1010' with slots 1011', 1012', 1013' and 1014', respectively provided for loading programming or data from a floppy disk, CD and/or hard disk onto the server 1000'. The server 1000' also includes a keyboard 1030' and mouse 1040', which serve as user input devices. A display monitor 1020' is also provided to visually communicate information to the user.

As depicted in Figure 12, the server 1000' has a main processor 1100' which is interconnected via bus 1110' with various storage devices including EPROM 1122', RAM 1123', hard drive 1124', which has an associated hard disk 1125', CD drive 1126', which has an associated CD 1127', and floppy drive 1128', which has an associated floppy disk 1129'. The memories, disks and CD all serve as storage media on which computer programming or data can be stored for access by the processor 1100'. A drive controller 1150' controls the hard drive 1124', CD drive 1126' and floppy drive 1128'. Also depicted in Figure 12 is a display controller 1120' interconnected to display interface 1121', a keyboard controller 1130' interconnected to keyboard interface 1131', a mouse controller 1140' interconnected to mouse interface 1141' and a modem 1160' interconnected to I/O port 1165', all of which are connected to the bus 1110'. The modem 1160' and interconnected I/O port 1165' are used to transmit and receive signals via the Internet as described above. It will be understood that other components may be connected if desired to the bus 1110'. By accessing the stored computer programming, the processor 1100' is driven to operate in accordance with the present invention.

The inter-operation of the various components of the seller server depicted in Figures 11 and 12 in implementing the invention as described above will now be discussed. Transmitted signals corresponding to those issued from the purchaser financial institute/representative server and the purchaser personal computer are received via I/O port 1165' and modem 1160' and directed over the bus 1110' to processor 1100'. The processor in accordance with programming instructions processes the information to perform the functions required of the seller's to accomplish cashless transactions in the above described manner. The programming instructions may be downloaded onto the RAM after activation of the seller server 1000' and accessed by the processor 1100' directly from the RAM 1120' during system operation.

The processor 1100' of the seller server 1000' receives signals via port 1165' and modem 1160' from the purchaser PC, over Internet link 210, responsive to which the processor 1100' generates signals transmitted via the modem 1160' and port 1165' downloading product and ordering information stored, for example, on the hard disk 1125', as indicated in step 825. The processor 1100' may, in certain implementations, also receive the purchaser information and payment selection entered by the purchaser in step 845. The processor 1100' will also received, via the port 1165' and modem 1160', the financial institute authorization which is transmitted over the internet link 230 by the financial institute/representative server in step 905. Once delivery occurs, information may be input to processor 1100' via the keyboard 1030', or otherwise as is well understood in the art, responsive to which the processor 1100' generates the signal representing a delivery notification which is transmitted via the modem 1160' and port 1165' to the financial institute/representative server, as indicated in step 910.

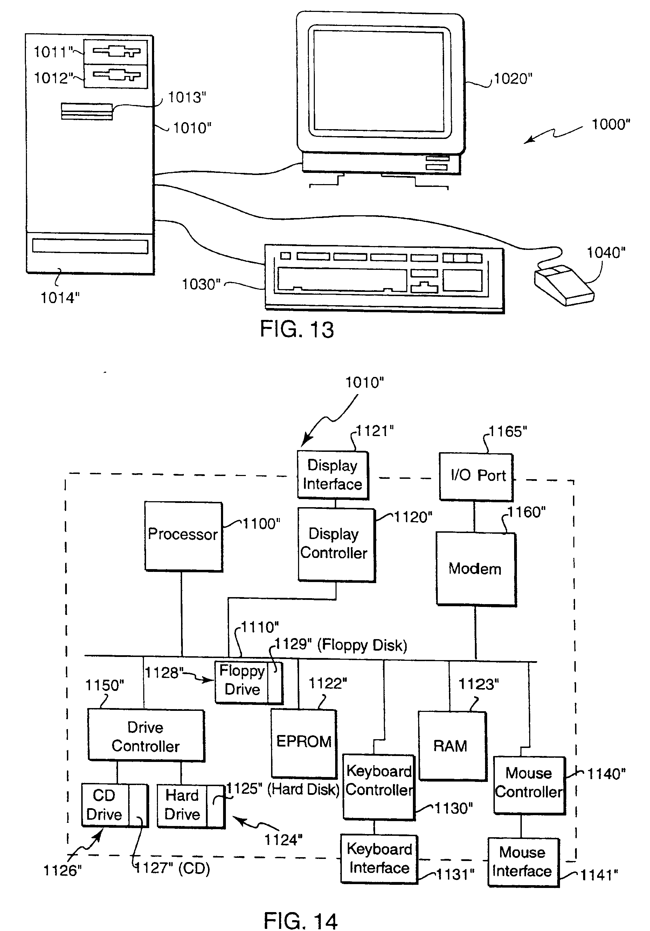

Figures 13 and 14 depict an exemplary network server suitable for use by the financial institute/representative 130 to access the Internet in the above-described embodiment of the invention. The server is preferably a commercially available high power, mini-computer or mainframe computer. The server processor could, for example, be an Alpha™ processor. Here again, it will be recognized that the server configuration is exemplary in that other components (not shown) could be added or substituted for those depicted and certain of the depicted components could be eliminated if desired.

The server functions as described above with reference to Figures 1-8, in accordance with stored programming instructions which drive its operation. As in the case of the seller server, preferably the purchaser financial institute/representative server stores its unique programming instructions on an EPROM or hard disk. It will be recognized that only routine programming is required to implement the instructions required to drive the server to operate in accordance with the invention, as described above. Further, since the server components and configuration are conventional, routine operations performed by depicted components will generally not be described, such operations being well understood in the art.

Referring to Figure 13, the server 1000'' includes a main unit 1010'' with slots 1011'', 1012'', 1013'' and 1014'', respectively, provided for loading programming or data from a floppy disk, CD and/or hard disk onto the server 1000''. The server 1000'' also includes a keyboard 1030'' and mouse 1040'' which serve as user input devices. A display monitor 1020'' is also provided to visually communicate information to the user.

As depicted in Figure 14, the server 1000'' has a main processor 1100'' which is interconnected via bus 1110'' with various storage devices including EPROM 1122'', RAM 1123'', hard drive 1124'', which has an associated hard disk 1125'', CD drive 1126'', which has an associated CD 1127'', and floppy drive 1128'', which has an associated floppy disk 1129''. The memories, disks and CD all serve as storage media on which computer programming or data can be stored for access by the processor 1100''. A drive controller 1150'' controls the hard drive 1124'', CD drive 1126'' and floppy drive 1128''. Also depicted in Figure 14 is a display controller 1120'' interconnected to display interface 1121'', a keyboard controller 1130'' interconnected to keyboard interface 1131'', a mouse controller 1140'' interconnected to mouse interface 1141'' and a modem 1160'' interconnected to I/O port 1165'', all of which are connected to the bus 1110''. The modem 1160'' and interconnected I/O port 1165'' are used to receive signals from and transmit signals over the Internet as described above. It will be understood that other components may be connected if desired to the bus 1110''. By accessing the stored computer programming, the processor 1100'' is driven to operate in accordance with the present invention.

The inter-operation of the various components of the financial institute/representative server depicted in Figures 13 and 14 in implementing the invention as described above will now be discussed. Transmitted signals corresponding to those issued from the seller server and the purchaser personal computer are received via I/O port 1165'' and modem 1160'' and directed over the bus 1110'' to processor 1100''. The processor in accordance with programming instructions processes the information to perform the functions required of the financial institute/representative's server to accomplish cashless transactions in the above described manner. The programming instructions may be downloaded onto the RAM after activation of the financial institute/representative server 1000'' and accessed by the processor 1100'' directly from the RAM 1120'' during system operation.

More particularly, the processor 1100'', after establishment of the Internet link 220 generates a signal which downloads to the purchaser PC, via the modem 1160'' and port 1165'' the log-on request shown in Figure 5, as indicated in step 865. The processor 1100'' receives, via the port 1165'' and modem 1160'', the log-on information, and the product and pricing information from the purchaser PC, as indicated in step 870. Responsive to the receipt of this information, the processor 1100'' determines if the deposited funds in the purchasers account with the applicable purchaser financial institute are sufficient, as indicated in step 875.

The processor 1100'' then generates a signal, which is transmitted via the modem 1160'' and port 1165'' to the purchaser computer, either notifying the purchaser that the deposited funds are insufficient, as indicated in step 880, or transmitting a purchaser authorization request, for example in the form of Figure 6, to the purchaser PC as indicated in step 885. The purchaser's response is received by the processor 1100'' via the port 1165'' and modem 1160''. The processor 1100'' determines, in step 890, whether the purchaser has authorized the payment of the total purchase price from the deposited funds.

If not, the processor 1100'' generates a notification to the purchaser, in step 880, which is transmitted via the modem 1160'' and port 1165'' confirming non-authorization. If the processor 1100'' determines that the authorization has been given, it proceeds to establish Internet link 230 to the seller server, as indicated in step 900. After the Internet link 230 has been established, the processor 1100'' generates a further signal which is transmitted via the modem 1160'' and port 1165'' to the seller server which indicates that the transaction has been authorized, as indicated in step 905.

The processor then receives via the port 1165'' and model 1160'' the delivery notification from the seller server. Responsive to this notification the processor 1100'' generates a signal directing the transfer of the deposited funds from the purchaser's deposit account to the seller's deposit account via the private network 150, as indicated in step 915. The processor 1100'' further generates a signal which is transmitted via modem 1160'' and port 1165'' providing an account statement, as for example shown in Figure 7, to the purchaser PC indicating the debiting of the total purchase price from the deposit account funds, as indicated in step 920.

As indicated above, if desired the purchaser 120 could interact directly with the seller server 1000' via the keyboard 1030' and mouse 1040' thereby eliminating PC 1000 and any need to establish the links 210, 220 and 220'. In such an implementation, two separate Internet links would be established between the seller server 1000' and financial institute/representative server 1000'', one of which would be the relatively insecure Internet link 230 and the other of which would be a relatively secure Internet link substituting for Internet link 220 shown in Figure 2. Using such an implementation, the process starting at step 825 of Figure 8 would generally be followed with the seller server 1000' performing the functions which would otherwise have been performed by the purchaser PC 1000 in the process.

As described above, the present invention provides a technique for conducting cashless transactions, for example over the Internet, which does not require disclosure of sensitive account related information and without the use of virtual cash or a private network to place an order.

It will also be recognized by those skilled in the art that, while the invention has been described above in terms of one or more preferred embodiments, it is not limited thereto. Various features and aspects of the above described invention may be used individually or jointly. Further, although the invention has been described in the context of its implementation in a particular environment and for particular purposes, e.g. electronic commerce, those skilled in the art will recognize that its usefulness is not limited thereto and that the present invention can be beneficially utilized in any number of environments and implementations. Accordingly, the claims set forth below should be construed in view of the full breath and spirit of the invention as disclosed herein.

## Claims

1. A method for conducting cashless transactions, comprising the steps of:
receiving, at a first network device associated with a seller, information identifying a product intended to be purchased at a purchase price by a purchaser, the purchase price to be paid by a transfer to the seller of funds on deposit in or credited to an account of the purchaser, the identity of the purchaser account being unknown to the seller;
transmitting over a network, to a second network device associated with a financial institute at which the purchaser account is maintained, an authorization of the purchaser to pay the purchase price for the identified product through the transfer to the seller of the funds from the purchaser account;
determining if the funds in the purchaser account are sufficient with respect to the purchase price; and
transmitting over the network, to the first network device, an authorization of the financial institute for the seller to proceed with delivery of the identified product, the authorization being transmitted only if the funds are determined to be sufficient.

2. A method according to claim 1, further comprising the step of:
transmitting over the network, from a third network device associated with the purchaser to the first network site, the information identifying the product intended to be purchased.

3. A method according to claim 2, wherein the information is first information and the transmitted first information further identifies the purchaser and that the payment of the purchase price will be by the transfer of the funds from the purchaser account unknown to the seller, and further comprising the steps of:
transmitting over the network, from the first network device to the third network device, second information identifying a plurality of products available for purchase, a plurality of purchase prices each associated with a respective one of the plurality of products, and a plurality of payment options including payment by the transfer to the seller of the funds and payment by at least one of credit card and debit card;
selecting, at the third network device, (i) the product to be purchased from the plurality of products and (ii) the payment of the purchase price by the transfer of the funds from the plurality of payment options; and
transmitting over the network, from and the third network device to the second network device, third information identifying the product to be purchased, the purchase price of the product, and the purchaser.

4. A method according to claim 3, wherein:
the authorization of the purchaser is transmitted from the third network device to the second network device.

5. A method according to claim 3, wherein:
the third information is transmitted responsive to the selecting the payment of the purchase price by the transfer of the funds.

6. A method according to claim 3, further comprising the step of:
automatically establishing a hyperlink to the second network device for transmission of the third information after the selecting of payment of the purchase price by the transfer of the funds.

7. A method according to claim 3, further comprising the steps of:
transmitting over the network, from the first network device to the second network device, a notice of delivery of the identified product to the purchaser; and
directing the transfer of the funds to the seller responsive to receipt of the notice of delivery at the second network device.

8. A method according to claim 1, wherein the method is performed in real time and the network is the Internet.

9. A system for conducting cashless transactions, comprising:
a communications network;
a first network device, associated with a seller, configured to receive information identifying a product intended to be purchased at a purchase price by a purchaser, the purchase price to be paid by a transfer to the seller of funds from an account of the purchaser, the identity of the purchaser account being unknown to the seller;
a second network device, associated with a financial institute at which the purchaser account is maintained, configured to receive, via the network, an authorization of the purchaser to pay the purchase price for the identified product by the transfer of the funds, to determine if the funds are sufficient with respect to the purchase price, and to transmit, to the first network device via the network, an authorization for the seller to proceed with delivery of the identified product if the funds are determined to be sufficient.

10. A system according to claim 9, further comprising:
a third network device, associated with the purchaser, configured to transmit, to the first network device via the network, the information identifying the product intended to be purchased.

11. A system according to claim 10, wherein:
the information is first information and the first information further identifies the purchaser and an intention of the purchaser to pay the purchase price by the transfer of the funds;
the first network device is further configured to transmit, to the third network device via the network, second information identifying a plurality of products available for purchase, a plurality of purchase prices each associated with a respective one of the plurality of products, and a plurality of payment options including payment by the transfer of the funds and payment by at least one of credit card and debit card;
the third network device is further configured to receive first input from the purchaser representing a selection of the product intended to be purchased from the plurality of products, to receive second input from the purchaser representing a selection of the payment of the purchase price by the transfer of the funds from the plurality of payment options, and to transmit, to the second network device via the network, third information identifying the product intended to be purchased, the purchase price of the product, and the intended purchaser.

12. A system according to claim 11, wherein:
the third network device is further configured to transmit, to the second network via the network, the authorization of the purchaser.

13. A system according to claim 11, wherein the third network device includes an input device for receiving the first input and the second input.

14. A system according to claim 11, wherein:
the third network device is further configured to transmit, to the second network device via the network, the third information responsive to receiving the second input.

15. A system according to claim 11, wherein:
the third network device is further configured to automatically establish a hyperlink to the second network device via the network for transmission of the third information responsive to receipt of the second input.

16. A system according to claim 11, wherein:
the first network device is further configured to transmit, to the second network device via the network, a notice of delivery of the identified product; and
the second network device is further configured to transmit, via the network, a directive to transfer the funds responsive to receipt of the notice of delivery.

17. A system according to claim 9, wherein the network is the Internet and the system operates in real time.

18. An article of manufacture for conducting cashless transactions over a network having a plurality of network stations, comprising;
a computer readable storage medium; and
computer programming stored on the storage medium, wherein the stored computer programming is configured to be readable from the computer readable storage medium by a computer and thereby cause the computer to operate so as to:
generate a signal to establish a first network communications link, with a first network station associated with a seller;
receive from the first network station, via the first network communications link, first information identifying a plurality of products available for purchase from the seller, a plurality of purchase prices each associated with a respective one of the plurality of products, and a plurality of payment options including payment of the purchase price by a transfer to the seller of funds from an account of a purchaser and payment by at least one of credit card and debit card;
display the first information;
receive first inputs from the purchaser selecting a product from the plurality of products and a payment of the purchase price by the transfer of the funds from the plurality of payment options;
automatically generate, responsive to the selection of the payment of the purchase price by the transfer of the funds, a signal to establish a second network communications link with a second network station associated with a financial institute with which the account is maintained;
transmit to the first network station, via the first network communications link, second information identifying the selected product, and the identity of the purchaser, without identifying the account;
transmit to the second network station, via the second network communications link, third information identifying the selected product, the purchase price of the selected product, and the identity of the purchaser;
receive from the second network station, via the second network communications link, a request to approve payment of the purchase price by the transfer by the financial institute to the seller of the funds;
receive second inputs from the purchaser approving payment of the purchase price for the selected product by the transfer by the financial institute to the seller of the funds;
transmit to a second network station, via the second network communications link, fourth information representing the purchaser approval of the payment of the purchase price for the selected product by the transfer by the financial institute to the seller of the funds; and
receive, via the second network communications link, fifth information representing an account statement indicating that the funds have been transferred from the account by the financial institute to the seller in payment of the purchase price of the selected product; and
display the fifth information.

19. An article of manufacture according to claim 18, wherein each of the network communication links is an Internet communication link and the second network communications link is established by a hyperlink.

20. An article of manufacture according to claim 18, wherein the first network communications link is a relatively unsecure communication link and the second network communications link is a relatively secure communications link.

21. An article of manufacture for conducting cashless transactions over a network having a plurality of network stations, comprising:
a computer readable storage medium; and
computer programming stored on the storage medium; wherein the stored computer programming is configured to be readable from the computer readable storage medium by a computer and thereby cause the computer to operate so as to:
receive, via the network, information identifying a product, a purchase price of the product, an identity of a seller of the product, and an identity of a purchaser intending to purchase the product by payment of the purchase price through a transfer by a financial institute to the seller of funds from an account of the purchaser maintained with the financial institute, the account being unidentified to the seller;
transmit to a first network station, via the network, a request for purchaser approval of the payment of the purchase price through the transfer by the financial institute to the seller of the funds;
receive from the first network station, via the network, the purchaser approval of the payment;
determine if the funds are sufficient with respect to the purchase price; and
transmit to a second network station, via the network, an authorization of the financial institute to proceed with a sale to the purchaser of the product after the funds are determined to be sufficient and the purchaser approval is received;
transmit a direction to transfer the funds in payment of the purchase price of the product; and
transmit to the first network station, via the network, an account statement indicating the funds have been transferred in payment of the purchase price of the product.

22. An article of manufacture according to claim 21, wherein the network is the Internet.

23. An article of manufacture according to claim 21, wherein communications transmitted to and received from the first network station via the network are relatively secure communications and communications transmitted to and received from the second network station via the network are relatively unsecure communications.
